# EUROPEAN PATENT SPECIFICATION

(11) **EP 1 604 361 B1**
(45) Date of publication and mention of the grant of the patent: **15.10.2008**
(21) Application number: 04715999.1
(22) Date of filing: 01.03.2004
(51) Int. Cl.: G11B 19/26, G11B 7/00

(54) **DUAL-SPEED OPTICAL RECORD CARRIER RECORDING APPARATUS**
AUFZEICHNUNGSVORRICHTUNG FÜR EINEN OPTISCHEN AUFZEICHNUNGSTRÄGER MIT ZWEI GESCHWINDIGKEITEN
APPAREIL D'ENREGISTREMENT DE SUPPORTS D'ENREGISTREMENT OPTIQUE A DOUBLE VITESSE

(30) Priority: 11.03.2003 EP 03100614
(43) Date of publication of application: 14.12.2005
(73) Proprietor: Koninklijke Philips Electronics N.V., 5621 BA Eindhoven (NL)
(72) Inventor: VLUTTERS, Ruud, NL-5656 AA Eindhoven (NL); VAN ROMPAEY, Bart, NL-5656 AA Eindhoven (NL); TIEKE, Benno, NL-5656 AA Eindhoven (NL)
(74) Representative: van Oudheusden-Perset, Laure E.
(86) International application number: PCT/IB2004/050168
(87) International publication number: WO 2004/081919

(56) References cited:
- EP-A- 1 143 427
- PATENT ABSTRACTS OF JAPAN vol. 1996, no. 08, 30 August 1996 (1996-08-30) & JP 8 087818 A (MATSUSHITA ELECTRIC IND CO LTD), 2 April 1996 (1996-04-02)

## Description

The present invention relates to an optical record carrier recording apparatus and method for recording data on a phase-change optical record carrier, in particular to a small form factor optical drive, and further to a portable device, such as a mobile phone or a palmtop computer. Still further, the present invention relates to an optical record carrier provided for dual-speed recording.

For a small form factor optical (SFFO) drive which is preferably to be used in a portable device, it is desired to have a rewritable phase-change optical record carrier (disc) on which the user can record data at different speeds, at least at a low and at a high speed. Low writing speed can be used when the drive is in a low power mode, e.g. when no mains are available, and a more power consuming high-speed recording mode can be used when the drive is in a high power mode, e.g. connected to an external power supply. With this high-speed recording mode, it will be possible to download files very rapidly from a PC to an SFFO drive.

Phase-change discs can be made with excellent recording properties, but are generally only optimal for their designed recording velocity. Introducing a high-speed recording mode will generally need faster crystallizing materials which will not work properly at lower recording speeds. In other words, the velocity range of a phase-change disc is not sufficient for both a low and a high-speed recording mode.

It is an object of the present invention to provide an alternative optical record carrier recording apparatus and method as well as an optical record carrier which allow the recording of data with at least two different writing speeds.

This object is achieved according to the present invention by an optical record carrier recording apparatus as claimed in claim 1 comprising:
- a writing means for recording data on said optical record carrier,
- a reading means for reading said state information from said optical record carrier,
a switching means for switching said writing means between at least two writing modes having different writing speeds depending on the power mode of the recording apparatus, wherein said writing means is switched into a first writing mode having a higher writing speed than a second writing mode when the recording apparatus is in a high power mode and if a crystalline area is available on said record carrier, and an address control means for controlling the address at which the data are recorded on said record carrier, wherein in said first writing mode the addresses are controlled based on said state information such that the data are only recorded in crystalline areas.

A corresponding method is defined in claim 13. A corresponding phase-change optical record carrier is defined in claim 15. Preferred embodiments thereof are defined in the dependent claims.

The present invention is based on the idea that on empty (fully crystalline) phase-change discs data can be recorded with a velocity much higher than the crystallization speed of the phase-change material. This can be done because the phase-change material only needs to be made amorphous by melt-quenching and no crystallization is needed, as in direct overwrite. An appropriate writing strategy for writing on a phase-change layer is, for instance, described in EP 1143427 A2.

An empty record carrier is fully crystalline, and its full user area is available for high-speed recording. When data gets written on the record carrier it is proposed according to the present invention to keep track of the location of the written areas, i.e. non-crystalline areas, and unwritten areas, i.e. crystalline areas, on the record carrier. This information is stored as state information on the record carrier and is updated each time data are recorded on the record carrier. This state information is mainly important in a high power mode when high-speed writing of data is generally possible.

Provided that storage space for high-speed writing, i.e. at least one crystalline area or even enough crystalline areas for storing all data to be written, are available on the record carrier the switching means will then, in high power mode, switch the writing means into the high-speed writing mode. At the same time the address control means ensure that in the high-speed mode data are only recorded in crystalline areas. If this area is full and more data still needs to be recorded, the remaining data will be recorded in non-crystalline areas, so that the switching means, at the same time, switch the writing means back into the low-speed writing mode. The low-speed writing mode is preferably also used if the recording apparatus is in a low power mode, e.g. supplied with power from a battery or an accumulator. However, also in low power mode the high-speed writing mode can be used if an application demands it and as long as the required power can be provided, e.g. by the battery or the accumulator.

According to a preferred embodiment simply the highest address at which data are written on the record carrier are stored as state information, and it is assumed that below this highest address all areas are non-crystalline areas and that all areas above said highest address are fully crystalline areas available for high-speed writing. Thus, if high-speed writing mode shall be used data are exclusively written above said highest address while in the low-speed writing mode data are preferably recorded below said highest address, i.e. if possible, data stored in non-crystalline areas below said highest address are overwritten if there are any overwriteble data available. Otherwise, also in low-speed writing mode data are written above said highest address.

According to another embodiment said state information is more sophisticated and comprises an address table listing the addresses of all crystalline and/or all non-crystalline areas, in particular lists all logical blocks (=physical recording units) of the record carrier and the corresponding state, i.e. the information if the logical block is crystalline or non-crystalline. Due to the low amount of logical blocks available on a small form factor optical disc, less than 4K byte is needed to store such an address table.

In order to assure that the high-speed writing area is as large as possible, the defragmentation procedure of the file system is slightly changed according to another embodiment. Data are reallocated in such a way that their addresses are minimal and system performance is optimal.

According to a further embodiment, the area between the maximum address of the data recorded on the record carrier before reallocation and the maximum address of the data recorded on the record carrier after reallocation can be DC-erased, i.e. made crystalline, preferably after the defragmentation step mentioned above. Thereafter, the state information is updated accordingly. This procedure can be done, for example, when the batteries of the recording apparatus have to be charged, since then sufficient electrical power and idle time is available anyway.

According to a preferred embodiment writing of data on the record carrier is started from the outside of the record carrier, i.e. the optical disc comprises a reversed spiral which runs from the outside of the disc to the inside contrary to the usual layout. In this case writing is always started with the lowest rotation speed of the disc possible and a given data rate which is advantageous in the low power mode of the recording apparatus.

Preferably, OPC (Optical Power Control) parameters are also provided on the record carrier for the first (high-speed) writing mode in addition to the normal OPC parameters for optical power control during the second (low-speed) writing mode. The start values for the OPC procedure are preferably written in the disc information block (DIB) which is written in the inner zone of the lead-in area. In this DIB there is space available to put also OPC parameters for other OPC procedures.

If the recording apparatus is connected to a mains power supply then high-speed recording as well as low-speed recording is available and both OPC procedures need to be carried out while in the low power mode only the low-speed OPC procedure is needed. It might even be that no OPC procedure is needed at all for the high-speed mode since the margins on writing with high speed on crystalline phase-change materials are much broader. Standard "scaling" factors which scale the OPC values to the specific high-speed recording velocity could be sufficient.

In the embodiment where writing starts on the outside of the record carrier, i.e. where the spiral is inverted, the lead-in area and therefore its OPC area are also on the outer radii of the record carrier. This is again advantageous for the high-speed recording OPC procedures and is economic for power consumption. Furthermore, it will be very easy to write large amounts of system data and system software in the high-speed recording mode at the outer radii during disc production.

According to another preferred embodiment the switching means is adapted for detecting the power mode of the recording apparatus from the power supplied or for receiving and evaluating an information, in particular from a portable device into which the recording apparatus is incorporated, identifying the power mode of the recording apparatus. Preferably, the switching means are adapted for switching the writing means into the first (high-speed) writing mode when power is supplied from a mains power supply, and for switching the writing means into the second writing mode when power is supplied from a battery or an accumulator.

Particularly for a small form factor optical drive the notion of CAV (Constant Angular Velocity) might be implemented in the drive. CLV (Constant Linear Velocity) is preferred for streaming applications but when the drive will be used as a data drive, CAV is the preferred mode of operation. In CAV mode the linear velocity along the track will increase with the factor 2.33 from the inner radius to the outer radius of a 1GB SFFO disc having an inner radius of 6.0mm and an outer radius of 14mm. The record carriers can probably marginally handle this, but need to be sensitive enough to be able to write properly at these higher speeds as well. This increased sensitivity makes repeated read of data difficult without erasing the data, certainly at the inner radii at lower linear velocities. However, it is not necessarily needed to make the disc more sensitive to make it high-speed compatible. Because the high-speed recording is done above the crystallisation velocity, the back crystallisation is minimal. Therefore, a blocked writing strategy instead of a pulsed writing strategy can be used, thereby using the laser more efficiently.

For SFFO a disc of 4.7 GB capacity is also envisaged, with the same inner hole as the 1 GB disc. The outer radius will then be about 24mm, meaning a factor 4 between the inner and outer velocity. In this case it is certainly impossible for the moment to manufacture media that can handle this spread in linear velocity at CAV mode.

An optical record carrier recording apparatus which makes sure, in case of using the CAV mode, that data are only written in fully initialised (crystalline) areas when the linear velocity is too large is defined in claim 9.

By this embodiment higher recording speeds are made possible without having a problem with the repeated read stability of the record carrier. Further, adapted write strategies are provided preferably. Such write strategies will then depend on the linear velocity at the current location on the disc and the state information at that location, i.e. if the material at this location is crystalline or non-crystalline. The advantage of this embodiment is that the velocity range of a corresponding record carrier as defined in claim 15 is increased drastically.

As mentioned above, the recording apparatus according to the invention is preferably applied in a portable device such as a telephone, in particular a mobile phone or a cordless phone, or a palmtop computer (PDA). Moreover, the recording apparatus is preferably a small form factor optical drive. Further portable devices comprising an optical record carrier recording apparatus may be digital camcorders, digital cameras, laptops, sub laptops and handheld devices.

The invention will now be explained in more detail with reference to the drawings in which
Fig. 1 shows a mobile phone according to the present invention,
Fig. 2 shows a first embodiment of a recording apparatus according to the present invention,
Fig. 3 shows a flow chart illustrating the recording method according to the present invention,
Figs. 4a, 4b show layouts of the data areas on a record carrier according to the present invention,
Fig. 5 shows an address table used in the data area layout of Fig. 4b and
Fig. 6 shows another embodiment of a recording apparatus according to the present invention.

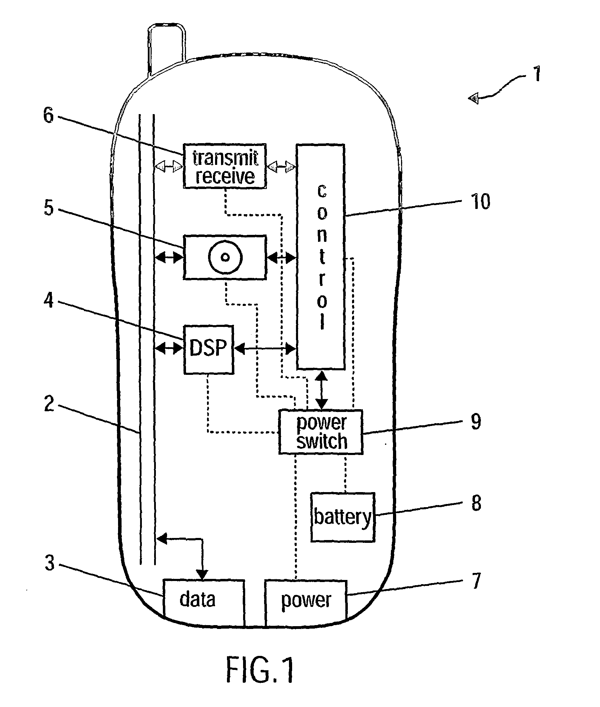

Fig. 1 shows a mobile phone 1 as one example of the portable device in which the invention can be implemented. The mobile phone 1 comprises a data bus 2 to which a data interface 3 for transmitting and receiving data via a cordless or corded connection, a data processing means 4, such as a digital signal processor (DSP), a small form factor optical drive 5 and a data transmitting and receiving unit 6 for high frequency mobile data transmission and reception are connected. The mobile phone 1 further comprises a power interface 7 to which an external power source, e.g. an AC/DC power adaptor connected to a mains supply can be connected. Further a battery (or accumulator) 8 is provided as internal power supply when the mobile phone 1 is used in a mobile environment where no external power is supplied at the power interface 7. A power switch 9 is provided to switch between the two power supplies 7 and 8 and to provide the elements of the mobile phone 1 with power as indicated by the broken lines. The power switch 9 is adapted to provide power supplied at power interface 7 in case an external power source is connected there. Otherwise battery power of the battery 8 is used. For control of the elements of the mobile phone 1 a control unit 10 is provided.

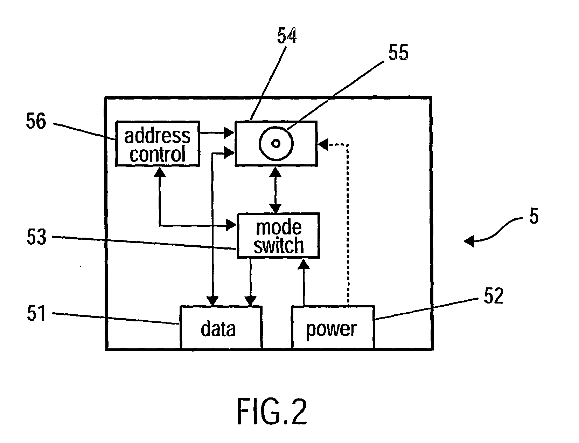

More details of the small form factor optical drive 5 are shown in the block diagram of Fig. 2. The drive 5 comprises a data interface 51 connected to the bus 2 of the mobile phone 1 for data input and output. Further, the drive 5 comprises a power interface 52 connected to the power switch 9 of the mobile phone 1 for power supply of the drive 5.

A mode switch 53 is provided to switch, depending on the power supplied at power interface 52, the read/write unit 54 between different writing modes during writing data to a record carrier 55, which is a small form factor optical disc in this embodiment. Further, an address control means 56 is provided for controlling the addresses at which data are written on the disc 55.

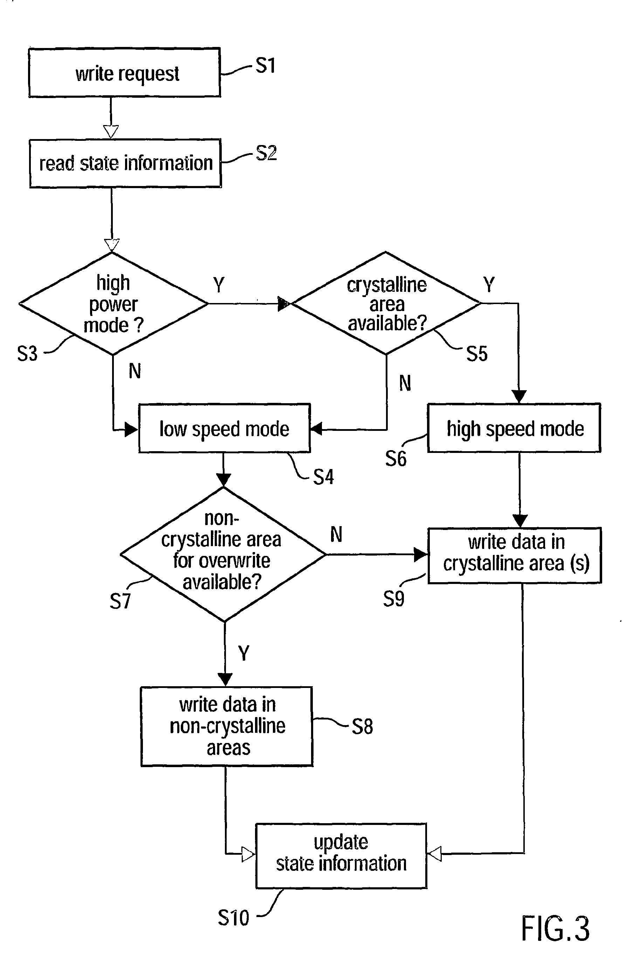

The function of the recording apparatus and the recording method according to the invention shall now be explained in more detail with reference to the flowchart of Fig. 3. In response to a write request (step S1) the read/write unit 54 reads the state information including the information about the location of crystalline and non-crystalline areas from the record carrier 55 (S2). Depending on the power mode of the recording apparatus 5, and further depending on the availability of crystalline areas on the record carrier 55 the writing mode, in particular the speed of writing, and the location where the data will be written will be determined.

At first (S3) it is checked by the mode switch 53 in which power mode the recording apparatus 5 is. This can be done by checking the power level provided at power interface 52 or by checking an information received at the power interface 52 identifying the power mode. Alternatively, a command can also be transmitted from an external device to the mode switch instructing the mode switch 53 to switch into a certain power mode. If the recording apparatus 5 is in a low power mode, e.g. provided with power from a battery supply, the mode switch 53 switches the read/write unit 54 into a low-speed mode (S4) which means that data will be written on the record carrier 55 with a low writing speed. According the preferred embodiment the crystallization speed of the phase-change disc 55 is tuned for this low-speed writing operation.

If the recording apparatus 5 is in a high power mode, it will then be checked if a crystalline area is available on the record carrier 55 for writing the data, i.e. if there is sufficient unwritten space available on the record carrier 55 for writing at least part of the data (S5). If this is not the case, then again the low-speed mode will be used (S4) while otherwise the read/write unit 54 will be switched into the high-speed mode (S6) for writing the data on the disc 55 with a higher writing speed.

In the low-speed mode it must further be checked if there are non-crystalline areas available for overwrite, e.g. if some of the data written in non-crystalline areas can be overwritten (S7). If this is the case the data will be written (i.e. overwritten) in such non-crystalline areas with low writing speed (S8) while otherwise the data will be written in crystalline (i.e. empty) areas (S9) with low writing speed. In the high-speed mode (S6) data will also be written in crystalline areas (S9), however with high writing speed, since in high power mode sufficient power (e.g. supplied from a mains power supply) is available. Finally, in all cases the state information will be updated (S10), e.g. it will be registered which areas are non-crystalline and which are crystalline. The updated state information will also be written on the record carrier 55.

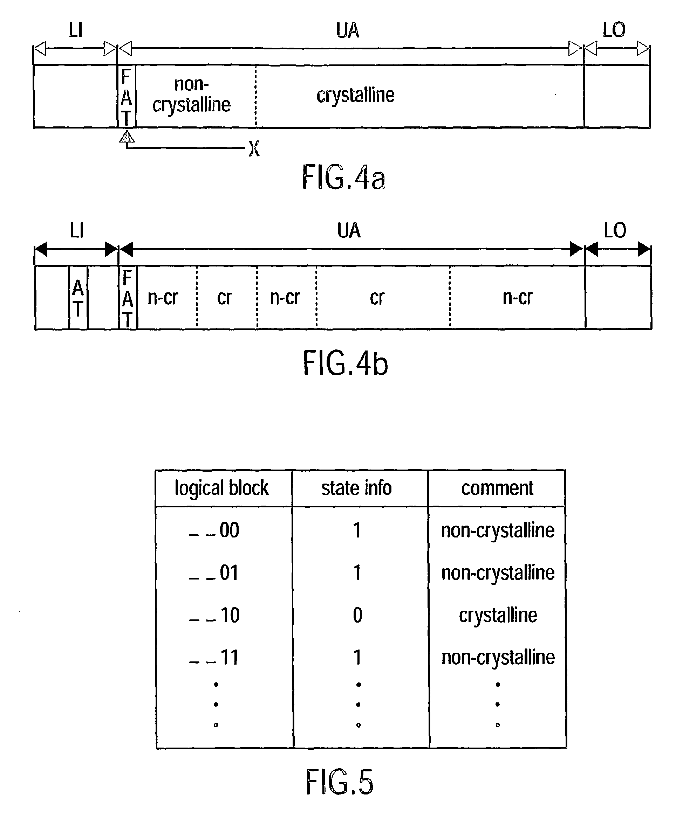

Fig. 4 shows two different ways of storing the state information on the record carrier. Shown are the different data areas of an optical disc, comprising a lead-in area LI, a user area UA and a lead-out area LO. User data are usually written in the user area UA in sequential order starting with the lowest addresses, i.e. starting from the left edge of the user area UA shown in Fig. 4. An empty disc is fully crystalline, and its full user area UA is available for high-speed recording. When data gets written on the disc the file system keeps track of a number X which is the highest address where data is once written on the disc. All addresses above X are unwritten and in the crystalline phase. The user area above X is thus available for high-speed recording of data. This number X is thus written on the disc as state information, preferably as part of the file allocation table (FAT).

When the drive is in low power mode, the standard writing procedure is applied, i.e. writing is done with normal writing speed. After writing the data the address X is updated. When the drive is in high power mode the address X is of importance. When the user wants to write data to the disc the allocation rules of the file system change. Data will now be written above the address X in high-speed mode as long as space remains available in that high-speed area. When that area is full and more data needs to be written, the file system will switch to the free space still available below address X. However, these areas are not necessary in crystalline phase and therefore need to be written in low speed.

In another embodiment, as shown in Fig. 4b, a more general address table (AT) is defined, for instance in the disc information block, i.e. written in the rewritable part of the lead-in area LI or as part of the file allocation table in the user area UA. In this table a list is maintained in which the state of every logical block is administered, i.e. for each logical block it is indicated if it is crystalline (unwritten) or non-crystalline (written). Such a table is shown in Fig. 5. For the state information one bit is sufficient, e.g. bit 0 indicating a crystalline block and bit 1 indicating a non-crystalline block. This embodiment is particularly useful if, as shown in Fig. 4b, the crystalline (cr) and non-crystalline (n-cr) areas are spread all over the user area UA.

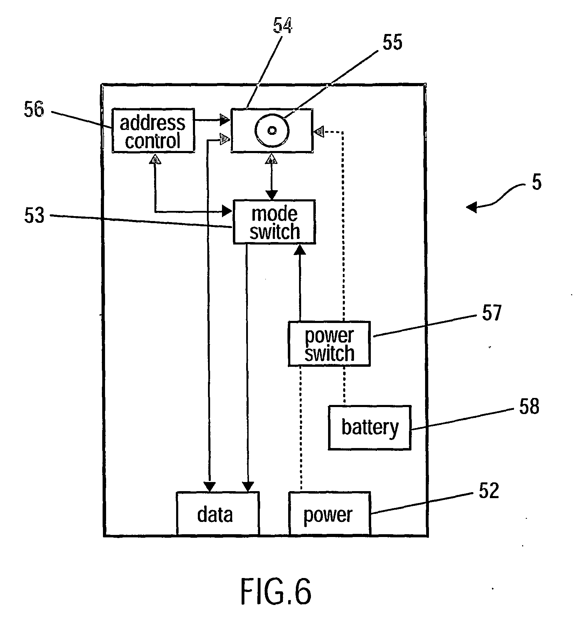

Another embodiment of a recording apparatus 5 is shown in Fig. 6. In this embodiment the power switch 57 is provided inside the recording apparatus 5, and also a battery 58 (or an accumulator). The power switch 57 has thus the same function as the power switch 9 as shown in Fig. 1. Further changes are possible, like to the number of power modes and writing modes. Further, the invention can also be applied in other embodiments of the recording apparatuses or other external devices different from the ones shown in the figures.

## Claims

1. An optical record carrier recording apparatus for recording data on a phase-change optical record carrier (55) storing a state information about the location of crystalline and non-crystalline areas of the record carrier (55), said apparatus comprising:
- a writing means (54) for recording data on said optical record carrier (55),
- a reading means (54) for reading said state information from said optical record carrier,
- a switching means (53) for switching said writing means (54) between at least two writing modes having different writing speeds depending on the power mode of the recording apparatus (5), wherein said writing means (54) is switched into a first writing mode having a higher writing speed than a second writing mode when the recording apparatus (5) is in a high power mode and if a crystalline area is available on said record carrier (55), and
- an address control means (56) for controlling the address at which the data are recorded on said record carrier (55), wherein in said first writing mode the addresses are controlled based on said state information such that the data are only recorded in crystalline areas.

2. An optical record carrier recording apparatus as claimed in claim 1, wherein said state information comprises the highest address (X) at which data are written.

3. An optical record carrier recording apparatus as claimed in claim 1, wherein said state information comprises an address table (AT) comprising the addresses of all crystalline and/or all non-crystalline areas of said record carrier (55), in particular the states of all logical blocks of said record carrier (55).

4. An optical record carrier recording apparatus as claimed in claim 1, wherein said address control means (56) is adapted for reallocating the data recorded on the record carrier (55) such that their addresses are minimal.

5. An optical record carrier recording apparatus as claimed in claim 4, wherein said writing means (54) are adapted for dc-erasing the area between the maximum address of the data recorded on the record carrier before reallocation and the maximum address of the data recorded on the record carrier after reallocation and for updating the state information accordingly.

6. An optical record carrier recording apparatus as claimed in claim 1, wherein said writing means (54) are adapted to start writing of data on said record carrier (55) from the outside of the record carrier (55).

7. An optical record carrier recording apparatus as claimed in claim 1, wherein additional OPC parameters for optical power control during said first writing mode are stored on said record carrier in addition to normal OPC parameters for optical power control during said second writing mode.

8. An optical record carrier recording apparatus as claimed in claim 1, wherein said switching means (53) is adapted for detecting the power mode of the recording apparatus (5) from the power supplied or for receiving and evaluating an information identifying the power mode of the recording apparatus (5).

9. An optical record carrier recording apparatus as claimed in claim 1, wherein said writing means (54) are adapted for recording data on said optical record carrier (55) with constant angular velocity in one of the first and second writing modes and wherein said address control means (56) are adapted for controlling the address at which the data are recorded on said record carrier (55) based on said state information such that data are only recorded in crystalline areas if the linear velocity is above a predetermined threshold velocity.

10. Portable device (1) comprising
- a data interface (3) for transmitting and receiving data,
- a battery unit (8) for internal power supply in a first power supply mode,
- a power interface (7) for connecting to a an external power supply unit for external power supply in a second power supply mode, and
- an optical record carrier recording apparatus (5) as claimed in any of claims 1 to 9 for storing data on or reading data from an optical record carrier (55).

11. Portable device as claimed in claim 10, wherein said portable device (1) is a telephone, in particular a mobile phone or a cordless phone, a palmtop computer, a laptop, a digital camera or a camcorder.

12. Portable device as claimed in claim 10, wherein said optical record carrier recording apparatus (5) is a small form factor optical drive.

13. An optical record carrier recording method for recording data on a phase-change optical record carrier (55) storing a state information about the location of crystalline and non-crystalline areas of the record carrier (55), said method comprising:
- recording data on said optical record carrier (55),
- reading said state information from said optical record carrier (55),
- switching between at least two writing modes having different writing speeds depending on the power mode of the recording apparatus (5), wherein it is switched into a first writing mode having a higher writing speed than a second writing mode when the recording apparatus (5) is in a high power mode and if a crystalline area is available on said record carrier (55), and
- controlling the address at which the data are recorded on said record carrier (55), wherein in said first writing mode the addresses are controlled based on said state information such that the data are only recorded in crystalline areas.

14. An optical record carrier recording method as claimed in claim 13, wherein the data on said optical record carrier (55) are recorded with constant angular velocity in one of the first and second writing modes and wherein the address at which the data are recorded on said record carrier are controlled based on said state information such that data are only recorded in crystalline areas if the linear velocity is above a predetermined threshold velocity.

## Patentansprüche

1. Aufzeichnungsgerät für einen optischen Aufzeichnungsträger zum Aufzeichnen von Daten auf einem optischen Phasenänderungs-Aufzeichnungsträger (55), das eine Zustandsinformation über die Stelle kristalliner und nicht-kristalliner Gebiete des Aufzeichnungsträgers (55) speichert, wobei das genannte Gerät Folgendes umfasst:
- ein Schreibmittel (54) zum Aufzeichnen von Daten auf dem genannten optischen Aufzeichnungsträger (55),
- ein Lesemittel (54) zum Auslesen der genannten Information aus dem genannten optischen Aufzeichnungsträger,
- ein Umschaltmittel (53) zum Umschalten des genannten Schreibmittels (54) zwischen wenigstens zwei Schreibmoden mit verschiedenen Schreibgeschwindigkeiten, und zwar abhängig von der Speisemode des Aufzeichnungsgeräts (5), wobei das genannte Schreibmittel (54) in eine erste Schreibmode mit einer höheren Schreibgeschwindigkeit als eine zweite Schreibode geschaltet wird, wenn das Aufzeichnungsgerät (5) sich in einer Hochleistungsmode befindet, und wenn ein kristallines Gebiet auf dem Aufzeichnungsträger (55) verfügbar ist, und
- ein Adressensteuermittel (56) zur Steuerung der Adresse, an der die Daten auf dem Aufzeichnungsträger (55) aufgezeichnet werden, wobei in der genannten ersten Schreibmode die Adressen auf Basis der genannten Information derart gesteuert werden, dass die Daten nur in kristallinen Gebieten aufgezeichnet werden.

2. Aufzeichnungsgerät für einen optischen Aufzeichnungsträger nach Anspruch 1, wobei die genannte Zustandsinformation die höchste Adresse (X) aufweist, an der Daten geschrieben werden.

3. Aufzeichnungsgerät für einen optischen Aufzeichnungsträger nach Anspruch 1, wobei die genannte Zustandsinformation eine Adressentabelle (AT) aufweist, der die Adressen aller kristallinen und/oder nicht-kristallinen Gebiete des genannten Aufzeichnungsträgers (55) umfasst, insbesondere die Zustände aller logischer Blöcke des genannten Aufzeichnungsträgers (55).

4. Aufzeichnungsgerät für einen optischen Aufzeichnungsträger nach Anspruch 1, wobei das genannte Adressensteuermittel (56) zum Neuzuordnen der auf dem Aufzeichnungsträger (55) aufgezeichneten Daten, und zwar derart, dass die Adressen minimal sind.

5. Aufzeichnungsgerät für einen optischen Aufzeichnungsträger nach Anspruch 4, wobei die genannten Schreibmittel (54) zum DC-Löschen des Gebietes zwischen der maximalen Adresse der auf dem Aufzeichnungsträger aufgezeichneten Daten vor der Neuzuordnung und der maximalen Adresse der auf dem Aufzeichnungsträger aufgezeichneten Daten nach der Neuzuordnung und zur entsprechenden Aktualisierung der Zustandsinformation vorgesehen sind.

6. Aufzeichnungsgerät für einen optischen Aufzeichnungsträger nach Anspruch 1, wobei die genannten Schreibmittel (54) zum Starten des Schreibvorgangs von Daten auf dem genannten Aufzeichnungsträger (55) von außerhalb des Aufzeichnungsträgers (55) vorgesehen sind.

7. Aufzeichnungsgerät für einen optischen Aufzeichnungsträger nach Anspruch 1, wobei nebst den normalen OPC Parametern zur optischen Speisesteuerung während der genannten zweiten Schreibmode zusätzliche OPC Parameter zur optischen Speisesteuerung während der genannten ersten Schreibmode auf dem genannten Aufzeichnungsträger gespeichert sind.

8. Aufzeichnungsgerät für einen optischen Aufzeichnungsträger nach Anspruch 1, wobei das genannte Umschaltmittel (53) zum Detektieren der Speisemode des Aufzeichnungsgeräts (5) aus der gelieferten Energie oder zum Empfangen und Bewerten einer Information, welche die Speisemode des Aufzeichnungsgeräts (5) identifiziert, vorgesehen ist.

9. Aufzeichnungsgerät für einen optischen Aufzeichnungsträger nach Anspruch 1, wobei die genannten Schreibmittel (54) zum Aufzeichnen von Daten auf dem genannten optischen Aufzeichnungsträger (55) mit einer konstanten Winkelgeschwindigkeit in der ersten oder in der zweiten Schreibmode vorgesehen sind und wobei die genannten Adressensteuermittel (56) zur Steuerung der Adresse, an der die Daten auf dem Aufzeichnungsträger (55) aufgezeichnet werden, vorgesehen sind, und zwar auf Basis der genannten Zustandsinformation, derart, dass Daten nur in kristallinen Gebieten aufgezeichnet werden, wenn die lineare Geschwindigkeit eine vorbestimmte Schwellengeschwindigkeit überschreitet.

10. Tragbares Gerät (1), das Folgendes umfasst:
- eine Datenschnittstelle (3) zum Übertragen und Empfangen von Daten,
- eine Batterieeinheit (8) zur internen Energielieferung in einer ersten Speisemode,
- eine Stromschnittstelle (7) zur Verbindung mit einer externen Energielieferungseinheit zur externen Energielieferung in einer zweiten Speisemode, und
- ein Aufzeichnungsgerät (5) für einen optischen Aufzeichnungsträger nach einem der Ansprüche 1 bis 9, zur Speicherung von Daten auf oder zum Auslesen von Daten aus einem optischen Aufzeichnungsträger (55).

11. Tragbares Gerät nach Anspruch 10, wobei das genannte tragbare Gerät (1) ein Telefon, insbesondere ein Handy oder ein drahtloses Telefon, ein Handcomputer, ein Laptop, eine Digitalkamera oder ein Camcorder ist.

12. Tragbares Gerät nach Anspruch 10, wobei das genannte Gerät (5) für einen optischen Aufzeichnungsträger ein optisches Kleinformat-Laufwerk ("small form factor") ist.

13. Aufzeichnungsverfahren für einen optischen Aufzeichnungsträger zum Aufzeichnen von Daten auf einem optischen Phasenänderungs-Aufzeichnungsträger (55), das eine Zustandsinformation über die Stelle kristalliner und nicht-kristalliner Gebiete des Aufzeichnungsträgers (55) speichert, wobei das genannte Verfahren die nachfolgenden Verfahrensschritte umfasst:
- das Aufzeichnen von Daten auf dem genannten optischen Aufzeichnungsträger (55),
- das Auslesen der genannten Zustandsinformation aus dem genannten optischen Aufzeichnungsträger,
- das Umschalten zwischen wenigstens zwei Schreibmoden mit verschiedenen Schreibgeschwindigkeiten, und zwar abhängig von der Speisemode des Aufzeichnungsgeräts (5), wobei in eine erste Schreibmode mit einer höheren Schreibgeschwindigkeit als eine zweite Schreibode geschaltet wird, wenn das Aufzeichnungsgerät (5) sich in einer Hochleistungsmode befindet, und wenn ein kristallines Gebiet auf dem genannten Aufzeichnungsträger (55) verfügbar ist, und
- das Steuern der Adresse, an der die Daten auf dem Aufzeichnungsträger (55) aufgezeichnet werden, wobei in der genannten ersten Schreibmode die Adressen auf Basis der genannten Zustandsinformation derart gesteuert werden, dass die Daten nur in kristallinen Gebieten aufgezeichnet werden.

14. Aufzeichnungsverfahren für einen optischen Aufzeichnungsträger nach Anspruch 13, wobei die Daten auf dem genannten optischen Aufzeichnungsträger (55) mit konstanter Winkelgeschwindigkeit in der ersten oder in der zweiten Schreibmode aufgezeichnet werden und wobei die Adresse, an der die Daten auf dem genannten Aufzeichnungsträger aufgezeichnet werden, auf Basis der genannten Zustandsinformation derart gesteuert werden, dass Daten nur in kristallinen Gebieten aufgezeichnet werden, wenn die lineare Geschwindigkeit eine vorbestimmte Schwellengeschwindigkeit übersteigt.

## Revendications

1. Appareil d'enregistrement de support d'enregistrement optique pour enregistrer des données sur un support d'enregistrement optique de changement de phase (55) stockant une information d'état relative à l'emplacement des zones cristallines et non cristallines du support d'enregistrement (55), ledit appareil comprenant:
- des moyens d'écriture (54) pour enregistrer des données sur ledit support d'enregistrement optique (55),
- des moyens de lecture (54) pour lire ladite information d'état à partir dudit support d'enregistrement optique,
- des moyens de commutation (53) pour commuter lesdits moyens d'écriture (54) entre au moins deux modes d'écriture ayant des vitesses d'écriture différentes en fonction du mode de puissance de l'appareil d'enregistrement (5) dans lequel lesdits moyens d'écriture (54) sont commutés dans un premier mode d'écriture ayant une plus grande vitesse d'écriture qu'un deuxième mode d'écriture lorsque l'appareil d'enregistrement (5) se situe dans un mode de haute puissance et si une zone cristalline est disponible sur ledit support d'enregistrement (55), et
- des moyens de commande d'adresse (56) pour commander l'adresse à laquelle les données sont enregistrées sur ledit support d'enregistrement (55) dans lequel dans ledit premier mode d'écriture les adresses sont commandées sur la base de ladite information d'état de telle façon que les données soient seulement enregistrées dans les zones cristallines.

2. Appareil d'enregistrement de support d'enregistrement optique selon la revendication 1, dans lequel ladite information d'état comprend l'adresse la plus élevée (X) à laquelle les données sont écrites.

3. Appareil d'enregistrement de support d'enregistrement optique selon la revendication 1, dans lequel ladite information d'état comprend une table d'adresses (AT) comprenant les adresses de toutes les zones cristallines et/ou de toutes les zones non cristallines dudit support d'enregistrement (55), en particulier, les états de tous les blocs logiques dudit support d'enregistrement (55).

4. Appareil d'enregistrement de support d'enregistrement optique selon la revendication 1, dans lequel lesdits moyens de commande d'adresse (56) sont adaptés de manière ré-affecter les données qui sont enregistrées sur le support d'enregistrement (55) de telle façon que leurs adresses soient minimales.

5. Appareil d'enregistrement de support d'enregistrement optique selon la revendication 4, dans lequel lesdits moyens d'écriture (54) sont adaptés de manière à dé-effacer la zone entre l'adresse maximale des données qui sont enregistrées sur le support d'enregistrement avant la ré-affectation et de ce fait pour la mise à jour de l'information d'état.

6. Appareil d'enregistrement de support d'enregistrement optique selon la revendication 1, dans lequel lesdits moyens d'écriture (54) sont adaptés de manière à commencer l'écriture des données sur ledit support d'enregistrement (55) à partir de l'extérieur du support d'enregistrement (55).

7. Appareil d'enregistrement de support d'enregistrement optique selon la revendication 1, dans lequel les paramètres OPC additionnels pour la commande de puissance optique pendant ledit premier mode d'écriture sont stockés sur ledit support d'enregistrement outre les paramètres OPC normaux pour la commande de puissance optique pendant ledit deuxième mode d'écriture.

8. Appareil d'enregistrement de support d'enregistrement optique selon la revendication 1, dans lequel lesdits moyens de commutation (53) sont adaptés de manière à détecter le mode de puissance de l'appareil d'enregistrement (5) à partir de la puissance étant alimentée ou à recevoir ou à évaluer une information identifiant le mode de puissance de l'appareil d'enregistrement (5).

9. Appareil d'enregistrement de support d'enregistrement optique selon la revendication 1, dans lequel lesdits moyens d'écriture (54) sont adaptés de manière à enregistrer les données sur ledit support d'enregistrement optique (55) avec une vitesse angulaire constante dans un des premier et deuxième modes d'écriture et dans lequel lesdits moyens de commande d'adresse (56) sont adaptés de manière à commander l'adresse à laquelle les données sont enregistrées sur ledit support d'enregistrement (55) sur la base de ladite information d'état de telle façon que les données soient seulement enregistrées dans les zones cristallines si la vitesse linéaire se situe au-dessus d'une vitesse prédéterminée de seuil.

10. Dispositif portatif (1) comprenant:
- une interface de données (3) pour la transmission et la réception des données,
- une unité de batterie (8) pour l'alimentation interne en puissance dans un premier mode d'alimentation en puissance,
- une interface de puissance (7) pour être connectée à une unité d'alimentation externe en puissance pour l'alimentation externe en puissance dans un deuxième mode d'alimentation en puissance, et
- un appareil d'enregistrement de support d'enregistrement optique (5) selon l'une quelconque des revendications précédentes 1 à 9 pour stocker les données sur ou pour lire les données à partir d'un support d'enregistrement optique (55).

11. Dispositif portatif selon la revendication 10, dans lequel ledit dispositif portatif (1) est un téléphone, en particulier, un mobile ou un poste téléphonique sans cordon, un ordinateur de poche, un ordinateur portable, une caméra numérique ou un caméscope.

12. Dispositif portatif selon la revendication 10, dans lequel ledit appareil d'enregistrement de support d'enregistrement optique (5) est un dispositif d'attaque optique de petit facteur de forme.

13. Procédé d'enregistrement de support d'enregistrement optique pour enregistrer des données sur un support d'enregistrement optique de changement de phase (55) stockant une information d'état relative à l'emplacement des zones cristallines et non cristallines du support d'enregistrement (55), ledit procédé comprenant les étapes suivantes consistant à:
- enregistrer les données sur ledit support d'enregistrement (55),
- lire ladite information d'état à partir dudit support d'enregistrement optique (55),
- commuter entre au moins deux modes d'écriture ayant des vitesses d'écriture différentes en fonction du mode de puissance de l'appareil d'enregistrement (5) dans lequel ils sont commutés dans un premier mode d'écriture ayant une plus grande vitesse d'écriture qu'un deuxième mode d'écriture lorsque l'appareil d'enregistrement (5) se situe dans un mode de haute puissance et si une zone cristalline est disponible sur ledit support d'enregistrement (55), et
- commander l'adresse à laquelle les données sont enregistrées sur ledit support d'enregistrement (55) dans lequel dans ledit premier mode d'écriture les adresses sont commandées sur la base de ladite information d'état de telle façon que les données soient seulement enregistrées dans les zones cristallines.

14. Procédé d'enregistrement de support d'enregistrement optique selon la revendication 13, dans lequel les données sur ledit support d'enregistrement optique (55) sont enregistrées avec une vitesse angulaire constante dans un des premier et deuxième modes d'écriture et dans lequel les adresses auxquelles les données sont enregistrées sur ledit support d'enregistrement sont commandées sur la base de ladite information d'état de telle façon que les données soient seulement enregistrées dans les zones cristallines si la vitesse linéaire se situe au-dessus d'une vitesse prédéterminée de seuil.
